Europäisches Patentamt

European Patent Office

Office européen des brevets

(19)

(11) **EP 0 776 136 B1**

(12) **FASCICULE DE BREVET EUROPEEN**

(45) Date de publication et mention
de la délivrance du brevet:
**07.06.2000 Bulletin 2000/23**

(51) Int Cl.⁷: **H04N 9/75**

(21) Numéro de dépôt: **96402511.8**

(22) Date de dépôt: **22.11.1996**

(54) **Procédé de calcul d'une clé de découpe d'un sujet évoluant devant un fond coloré et dispositif mettant en oeuvre ce procédé**

Verfahren und Vorrichtung zur Berechnung eines Farbstanzsignals für ein sich vor einem farbigen Hintergrund bewegendes Objekt

Method and apparatus for calculating a chroma key of an object evolving on a coloured background

(84) Etats contractants désignés:
**DE ES FR GB IT**

(30) Priorité: **23.11.1995 FR 9513953**

(43) Date de publication de la demande:
**28.05.1997 Bulletin 1997/22**

(73) Titulaire: **THOMSON BROADCAST SYSTEMS
95801 Cergy-Pontoise Cedex (FR)**

(72) Inventeurs:
• **Demay, Alain
92050 Paris la Defense Cedex (FR)**
• **Le Lan, Michel
92050 Paris la Defense Cedex (FR)**

(74) Mandataire: **Ruellan-Lemonnier, Brigitte et al
THOMSON multimedia,
46 quai A. Le Gallo
92648 Boulogne Cédex (FR)**

(56) Documents cités:
**EP-A- 0 014 665        EP-A- 0 024 973
EP-A- 0 074 824        WO-A-91/05443
DE-A- 4 017 878        DE-A- 4 217 686
US-A- 5 355 174**

• **INTERNATIONAL BROADCASTING
CONVENTION, Septembre 1984, BRIGHTON, UK,
pages 148-152, XP002005261 V.G. DEVEREUX:
"Digital chroma-key"**

EP 0 776 136 B1

**Description**

L'invention concerne un procédé de calcul d'une clé de découpe d'un sujet évoluant devant un fond coloré de façon à pouvoir incruster ce sujet sur un nouveau fond coloré.

L'invention concerne également tout dispositif ou appareil électronique mettant en oeuvre ce procédé tels que, par exemple, les mélangeurs vidéo ou encore les dispositifs autonomes de découpe et d'incrustation d'images vidéo communément appelés en anglais "chroma-keyers". De tels dispositifs ou appareils électroniques sont utilisés, par exemple, dans les matériels de studio de télévision.

Dans la suite de la description, l'image source constituée du sujet évoluant sur le fond coloré sera appelée vidéo sujet.

La clé de découpe doit permettre de cerner au mieux le sujet à découper. Ainsi est-il souhaitable de vouloir conserver le maximum de détails du sujet, tels que, par exemple pour un personnage, les cheveux isolés, la transparence des verres de lunettes, ou encore la fumée d'une cigarette.

Comme cela est connu de l'homme de l'art, la clé de découpe a pour fonction de permettre la distinction entre le fond coloré de la vidéo sujet et le sujet lui-même. Il est alors nécessaire de définir dans l'espace des couleurs un volume représentant le fond coloré de façon à pouvoir extraire le sujet du fond coloré pour l'incruster devant un nouveau fond, comme cela est décrit, par exemple, dans WO-A-9105443 et EP-A-24973.

L'invention concerne une nouvelle approche volumique du fond coloré de façon à intégrer au mieux les détails du sujet tels que ceux mentionnés plus haut.

A cette fin, l'invention concerne un procédé de calcul d'une clé KD de découpe d'un sujet évoluant devant un fond coloré, ladite clé permettant de séparer l'espace des couleurs en trois zones, une première zone définissant un volume représentant le fond coloré, une deuxième zone définissant un volume représentant le sujet et une troisième zone définissant une zone de transition entre le fond coloré et le sujet. Ce procédé comprend différentes étapes de calcul permettant de définir le volume représentant le fond coloré sous forme de cône d'angle d'ouverture $\alpha$ dont l'axe de symétrie passe par le point achrome et de luminance nulle de l'espace des couleurs et un point représentant la couleur du fond coloré.

De même, l'invention concerne un appareil électronique comprenant des moyens pour calculer une clé de découpe d'un sujet évoluant devant un fond coloré, ladite clé permettant de séparer l'espace des couleurs en trois zones, une première zone définissant un volume représentant le fond coloré, une deuxième zone définissant un volume représentant le sujet et une troisième zone définissant une zone de transition entre le fond coloré et le sujet. Les moyens pour calculer la clé de découpe comprennent des moyens pour calculer les coordonnées de chaque pixel de l'espace des couleurs dans un repère (U, V, W), le repère (U, V, W) étant un trièdre direct dont le centre est le point achrome de luminance nulle et dont l'axe W pointe vers un point de couleur du fond coloré, et des moyens pour définir le volume représentant le fond coloré sous forme de cône d'angle d'ouverture $\alpha$ ayant pour axe de symétrie l'axe W.

Les différentes caractéristiques et avantages de l'invention apparaîtront à la lecture d'un mode de réalisation préférentiel fait avec référence aux figures ci-annexées parmi lesquelles :

- La figure 1 représente un exemple de volume de fond coloré selon l'art antérieur ;
- Les figures 2a et 2b représentent les transformations géométriques du référentiel (CB, CR, Y) permettant de définir le nouveau référentiel (U, V, W) de l'espace des couleurs permettant l'approche volumique du fond coloré selon l'invention ;
- La figure 3 représente un pixel de l'espace des couleurs dans le nouveau référentiel mentionné ci-dessus ;
- La figure 4 représente le volume du fond coloré selon l'invention ;
- La figure 5 représente la vue en coupe du volume du fond coloré de l'invention selon un plan perpendiculaire à un premier axe du nouveau référentiel ;
- La figure 6 représente la vue en coupe du volume du fond coloré de l'invention selon un plan perpendiculaire à un deuxième axe du nouveau référentiel ;
- La figure 7 représente l'algorithme de calcul de la clé de découpe selon l'invention ;
- La figure 8 représente un perfectionnement de l'algorithme décrit en figure 7 ;
- La figure 9 représente une description du perfectionnement décrit en figure 8.

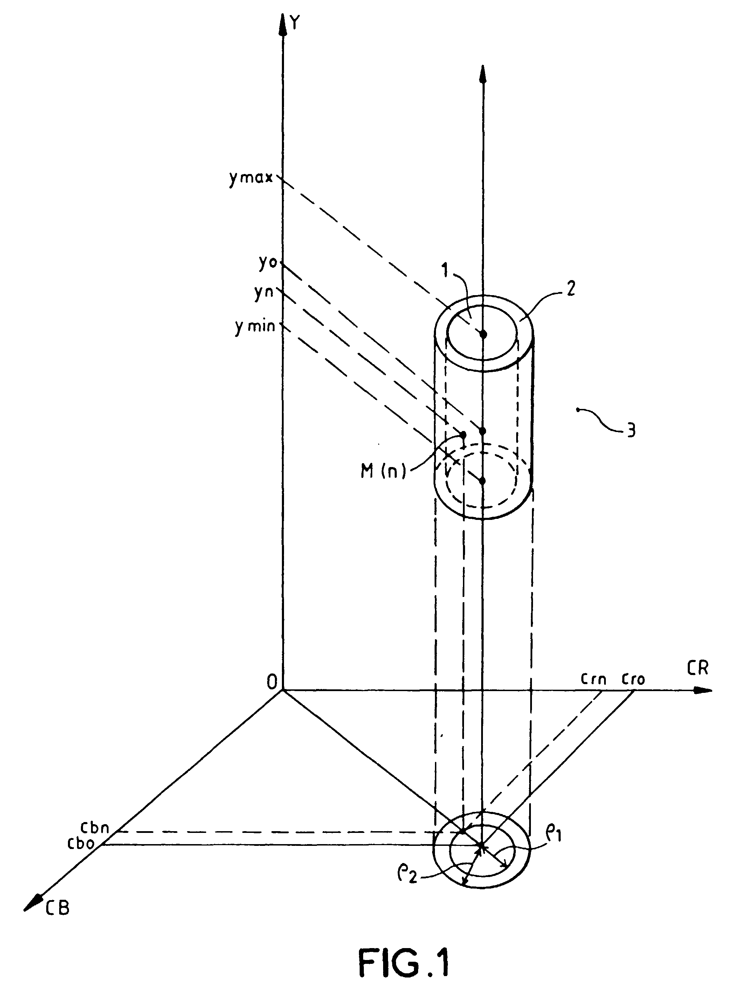

La figure 1 représente un exemple de volume de fond coloré selon l'art antérieur.

Chaque pixel M(n) d'indice n du fond coloré est représenté par ses trois coordonnées yn, cbn, crn où yn, cbn et crn sont respectivement la composante luminance, la composante chrominance de différence de couleur bleue et la composante chrominance de différence de couleur rouge du pixel $M_{(n)}$. Pour des raisons de commodité, par la suite, les composantes chrominance de différence de couleur seront appelées composantes chrominance. La valeur moyenne yO, cbO, crO de chaque composante du fond coloré s'écrit alors :

$$y0 = \frac{1}{N} \sum_{j=1}^{N} yj$$

$$cb0 = \frac{1}{N} \sum_{j=1}^{N} cbj$$

$$cr0 = \frac{1}{N} \sum_{j=1}^{N} crj$$

où N est le nombre de pixels du fond coloré correspondant à une fenêtre d'acquisition pointant sur tout ou partie du fond coloré.

Dans le plan (CB, CR), le calcul de la distance euclidienne $\rho_n$ d'un pixel d'indice n par rapport au point cbO, crO est donné par la relation :

$$\rho_n = \sqrt{(cr_n - cr0)^2 + (cb_n - cb0)^2}.$$

Deux opérations de seuillage, l'une dans le plan (CB, CR) et l'autre selon l'axe Y permettent alors de définir la zone de discrimination entre fond et sujet. Ainsi, tout point dont la valeur de luminance est comprise entre les valeurs extrêmes $y_{min}$ et $y_{max}$ et dont la distance euclidienne est inférieure à une valeur $\rho_1$ appartient au fond coloré 1.

De même, tout point dont la valeur de luminance est comprise entre les valeurs $y_{min}$ et $y_{max}$ et dont la distance euclidienne $\rho_n$ est supérieure à une valeur $\rho_2$, elle-même supérieure à $\rho_1$, appartient au sujet 3. Enfin, tout point dont la valeur de luminance est comprise entre les valeurs $y_{min}$ et $y_{max}$ et dont la distance euclidienne $\rho_n$ est comprise entre $\rho_1$ et $\rho_2$ appartient à une zone intermédiaire de transition 2.

Le réglage du contenu de l'image s'avère difficile avec une telle approche volumique. La forme cylindrique du volume décrit en figure 1 présente de nombreux inconvénients. Par exemple, il est difficile de traiter de trop fortes variations de luminance du fond coloré sans affecter la luminance du sujet. De même, les pixels représentant l'ombre portée ne peuvent pas être intégrés au volume du fond coloré. Il s'ensuit que tout traitement de l'ombre s'avère impossible.

L'invention ne présente pas ces inconvénients.

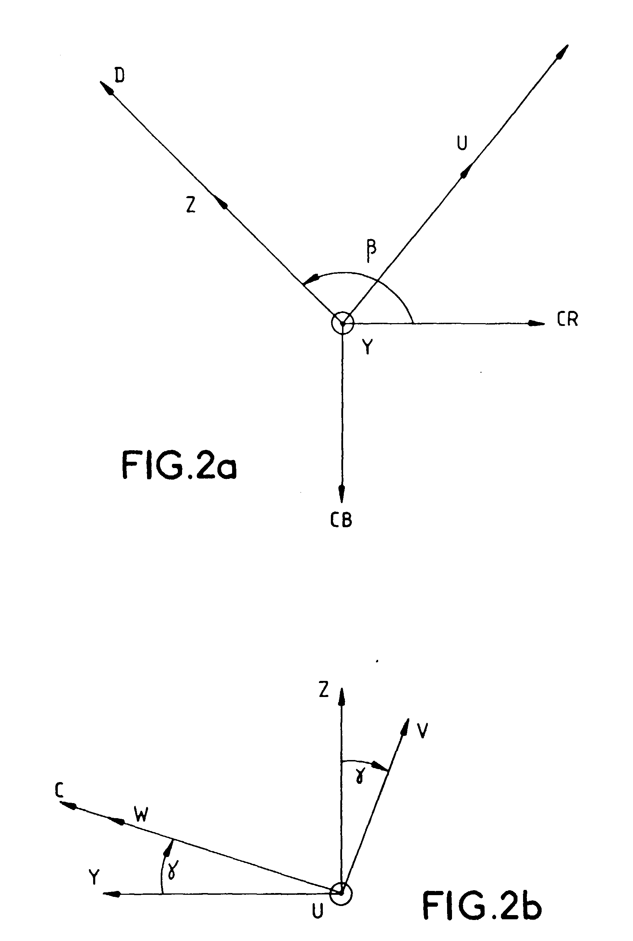

Les figures 2a et 2b représentent les différentes transformations permettant de construire le volume définissant le fond coloré selon l'invention.

La figure 2a représente une rotation du plan (CB, CR) à luminance nulle (Y = 0) autour de l'axe Y. L'angle de rotation β est tel que l'axe CR devient l'axe Z qui pointe dans la direction D vers la teinte de la couleur du fond coloré. A l'aide de cette même rotation, l'axe CB devient l'axe U perpendiculaire à l'axe Z de façon que le trièdre (U, Z, Y) soit un trièdre direct. Ce changement de repère peut s'exprimer sous forme matricielle par la relation :

$$\begin{pmatrix} u \\ z \end{pmatrix} = \begin{pmatrix} \cos(\beta) & \sin(\beta) \\ -\sin(\beta) & \cos(\beta) \end{pmatrix} \begin{pmatrix} cb \\ cr \end{pmatrix}$$

où cb et cr sont les composantes d'un point de l'espace des couleurs selon les axes CB et CR où u et z sont les composantes de ce même point selon les axes U et Z.

La figure 2b représente une rotation du plan (Z, Y) autour de l'axe U. L'angle de rotation γ est tel que l'axe Y devient l'axe W qui pointe dans la direction C vers la couleur du fond coloré. A l'aide de cette même rotation, l'axe Z devient l'axe V perpendiculaire à l'axe W de façon que le trièdre (U, V, W) soit un trièdre direct.

Ce changement de repère peut s'exprimer sous forme matricielle par la relation :

$$\begin{pmatrix} w \\ v \end{pmatrix} = \begin{pmatrix} \cos(\gamma) & \sin(\gamma) \\ \sin(\gamma) & -\cos(\gamma) \end{pmatrix} \begin{pmatrix} z \\ y \end{pmatrix}$$

où z et y sont les composantes d'un point de l'espace des couleurs selon les axes Z et Y et où w et v sont les composantes de ce même point selon les axes W et V.

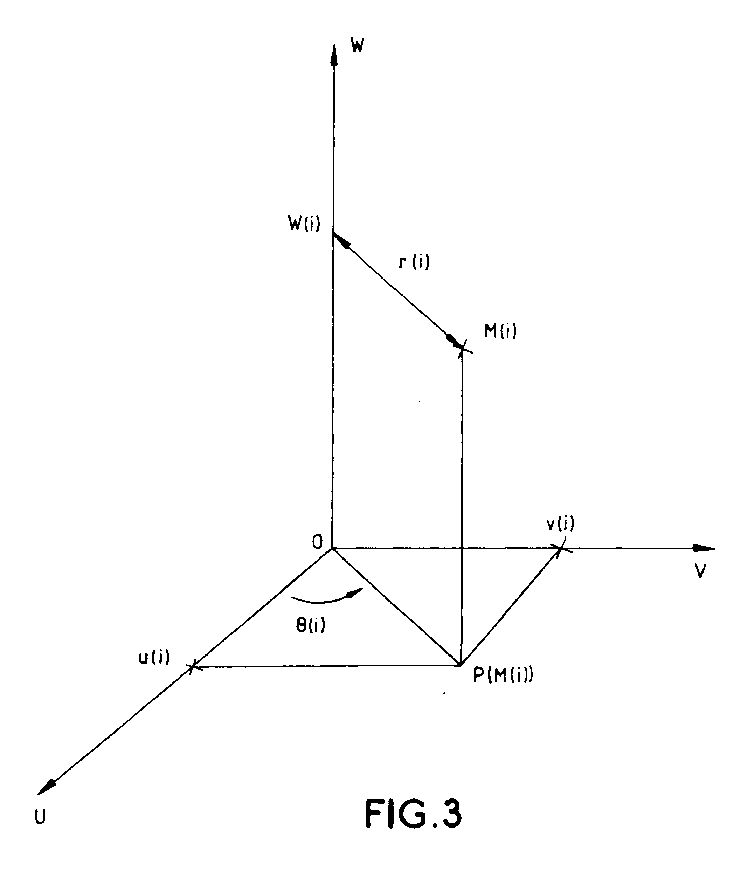

La figure 3 représente un pixel de l'espace des couleurs dans le nouveau référentiel construit aux figures 2a et 2b.

Le pixel $M_{(i)}$ a une composante suivant chacun des trois axes U, V, W, soit, respectivement, les composantes $u_{(i)}$, $v_{(i)}$ et $w_{(i)}$.

Les coordonnées cylindriques du point $M_{(i)}$ dans le repère (U, V, W) sont : $r_{(i)}$, $\theta_{(i)}$ et $w_{(i)}$. Comme cela est connu, il vient :

$$r_{(i)} = \sqrt{u_{(i)}^2 + v_{(i)}^2}$$

et

$$\theta_{(i)} = (\vec{U}, \vec{O}P_{(Mi)})$$

où le point $P_{(Mi)}$ est la projection du point $M_{(i)}$ sur le plan (U, V).

Dans la suite de la description, la distance $r_{(i)}$ sera appelée distance chrominance du point $M_{(i)}$ par rapport à l'axe W.

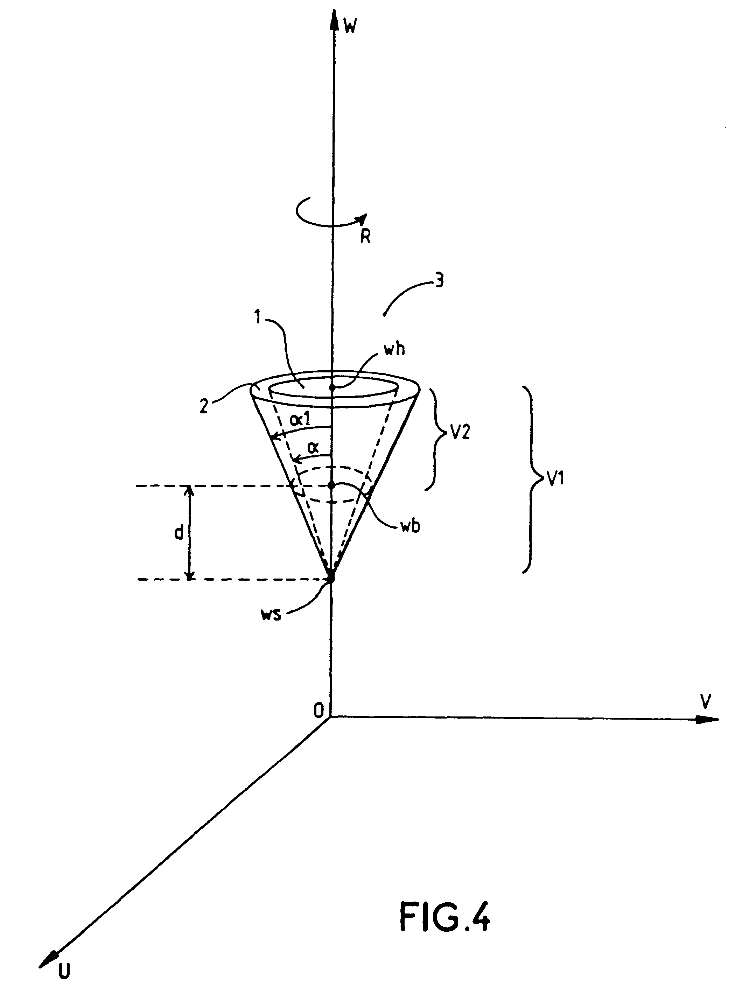

La figure 4 représente l'approche volumique du fond coloré selon l'invention.

Le volume qui représente le fond coloré a la forme d'un cône entier (volume V1) ou tronqué (volume V2) dans l'espace des couleurs référencé par rapport au nouveau repère (U, V, W) déduit du repère (CB, CR, Y) par les transformations géométriques décrites aux figures 2a et 2b. L'espace des couleurs est divisé en trois zones, comme précédemment : la zone 1 qui représente le fond coloré, la zone 3 qui représente le sujet et la zone 2 qui représente la transition entre le sujet et le fond coloré.

Le cône représentant le fond coloré est défini par une ouverture angulaire $\alpha$, un sommet situé à l'abscisse ws sur l'axe W, une section elliptique ou circulaire. Un seuil de luminance haut, d'abscisse wh sur l'axe W, permet de définir la face opposée au sommet du cône. Un seuil de luminance bas, d'abscisse wb sur l'axe W, permet de définir la face tronquée située à la distance d du sommet d'abscisse ws. L'abscisse wb peut coïncider avec l'abscisse ws. Selon l'invention, le cône peut tourner d'un angle R variant de 0 à $\pi$ autour de l'axe W.

La zone de transition 2 est définie par l'espace compris entre la surface du cône d'ouverture $\alpha$ et la surface d'un cône d'ouverture $\alpha 1$ supérieure à $\alpha$, de même axe de symétrie et de même sommet que le cône d'ouverture $\alpha$ et dont la face opposée au sommet du cône est dans le même plan que la face opposée au sommet du cône d'ouverture $\alpha$.

La zone 3 représentant le sujet est définie par l'espace situé au-delà du cône d'ouverture $\alpha 1$.

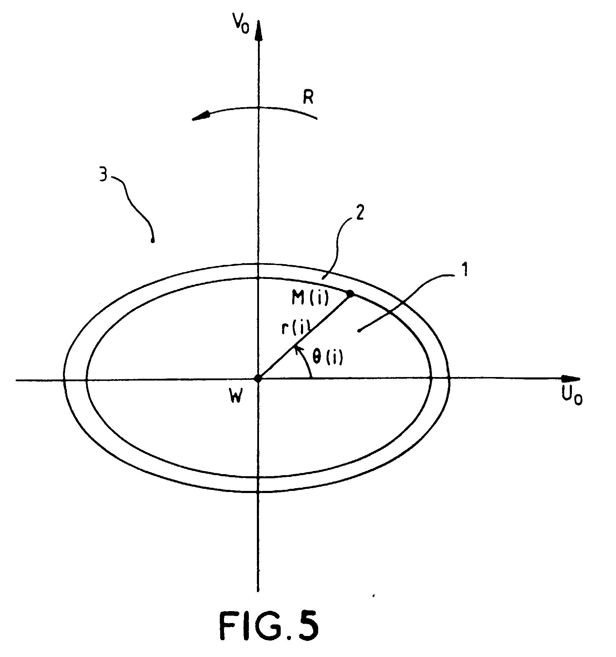

La figure 5 représente la vue en coupe du volume du fond coloré de l'invention selon un plan ($U_0$, $V_0$) de section droite du cône.

Cette vue en coupe présente une section elliptique. Cette section elliptique est susceptible de tourner autour de l'axe W d'un angle R comme cela a été mentionné ci-dessus. Les coordonnées $r_{(i)}$ et $\theta_{(i)}$ de chaque pixel $M_{(i)}$ délimitant le fond coloré sont alors reliées par l'équation :

$$k^2 r_{(i)}^2 \cos^2(\theta_{(i)} + R) + r_{(i)}^2 \sin^2(\theta_{(i)} + R) = \text{constante.}$$

La modulation du paramètre k permet la déformation de l'ellipse. Selon l'invention, la modulation elliptique de la distance chrominance laisse la possibilité de réaliser un cercle dans le cas où k = 1. De façon préférentielle k varie entre 1 et 2. La valeur de R peut varier de 0 à $\pi$. Avantageusement, cette technique de modulation permet d'accroître la sélectivité du volume définissant le fond coloré. A titre d'exemple, la technique de modulation elliptique associée à la rotation R permet une nette amélioration pour reproduire la transparence des verres.

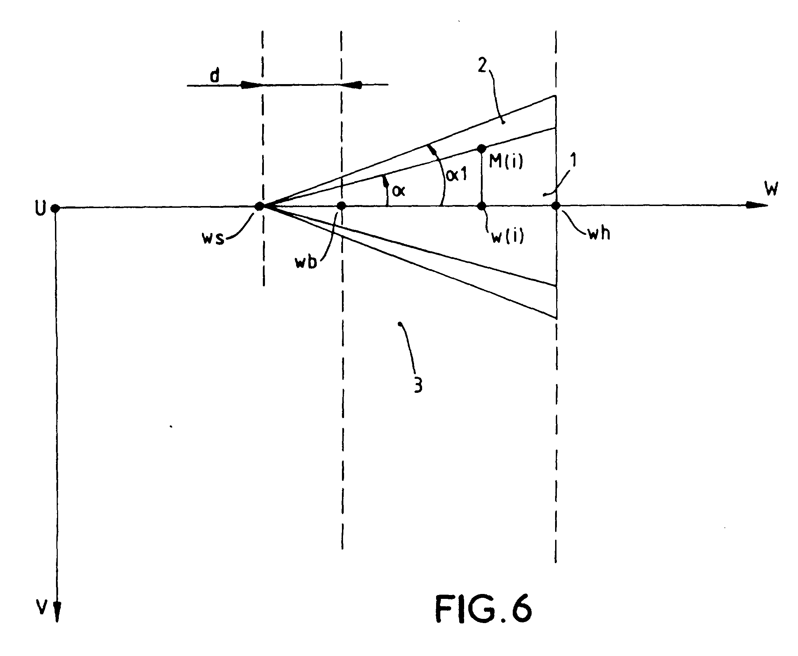

La figure 6 représente la vue en coupe du volume du fond coloré de l'invention selon un plan passant par le grand axe de l'ellipse et le sommet du cône.

Selon l'invention, le volume conique est défini de façon que la distance chrominance modulée elliptiquement, notée $r_{e(i)}$, l'angle d'ouverture $\alpha$ du cône et la coordonnée $w_{(i)}$ du point dont la distance chrominance est $r_{e(i)}$ soient reliés par l'équation :

$$r_{e(i)} - \alpha\, w_{(i)} = CLIP$$

où CLIP est un paramètre dont la variation permet d'engendrer le déplacement de l'ordonnée ws du sommet du cône sur l'axe W. A titre d'exemple, la plage de variation de l'angle $\alpha$ est comprise entre 0 et 45°. L'action conjuguée des paramètres $\alpha$ et CLIP permet avantageusement une modulation de la définition du fond coloré, et partant du sujet à traiter. Pour une valeur de seuillage ws nulle, l'ensemble du volume découpé descend jusqu'au plan des noirs.

La variation de l'abscisse ws permet d'intégrer dans le volume qui définit le fond coloré des points de luminance plus ou moins faible ayant la teinte du fond coloré. Avantageusement, il est alors possible de prendre en compte des fonds colorés non uniformes et dont la luminance varie à l'oeil de façon non négligeable. Comme cela a été mentionné précédemment (cf. figure 4), le cône peut être tronqué d'une distance d dans le cas où wb est différent de ws.

Le paramètre CLIP permet de calculer la clé de chrominance KC. Tout point de l'image dont la distance chrominance est inférieure à la valeur CLIP appartient au fond coloré 1 et possède une clé de chrominance KC nulle.

La zone de transition 2 est associée au seuillage de la distance chrominance et permet d'effectuer le passage progressif entre le fond et le sujet. La taille de la zone de transition est ajustable par un paramètre de réglage appelé GAIN. A cette fin, le paramètre GAIN permet de calculer la distance séparant les points appartenant au cône d'ouverture $\alpha 1$ de ceux appartenant au cône d'ouverture $\alpha$. Tout point de l'image situé en zone 3, au-delà de la zone de transition 2, appartient au sujet et a une valeur de clé de chrominance KC égale à 1.

Tous les points d'abscisse w(i) inférieure à wb ont une clé de luminance KL égale à 1. Tous les points d'abscisse w(i) supérieure à wh ont une clé de luminance KL égale à 0. Tous les points d'abscisse w(i) situés entre wb et wh sont dans la zone de transition en luminance.

La génération de la clé de découpe KD du fond coloré est réalisée grâce à la combinaison de la clé de chrominance KC et de la clé de luminance KL. Ainsi, pour chacun des points de l'image, le calcul du maximum des deux clés permet-il la construction du volume définissant le fond coloré ; il vient :

$$KD = MAX\ [KC, KL].$$

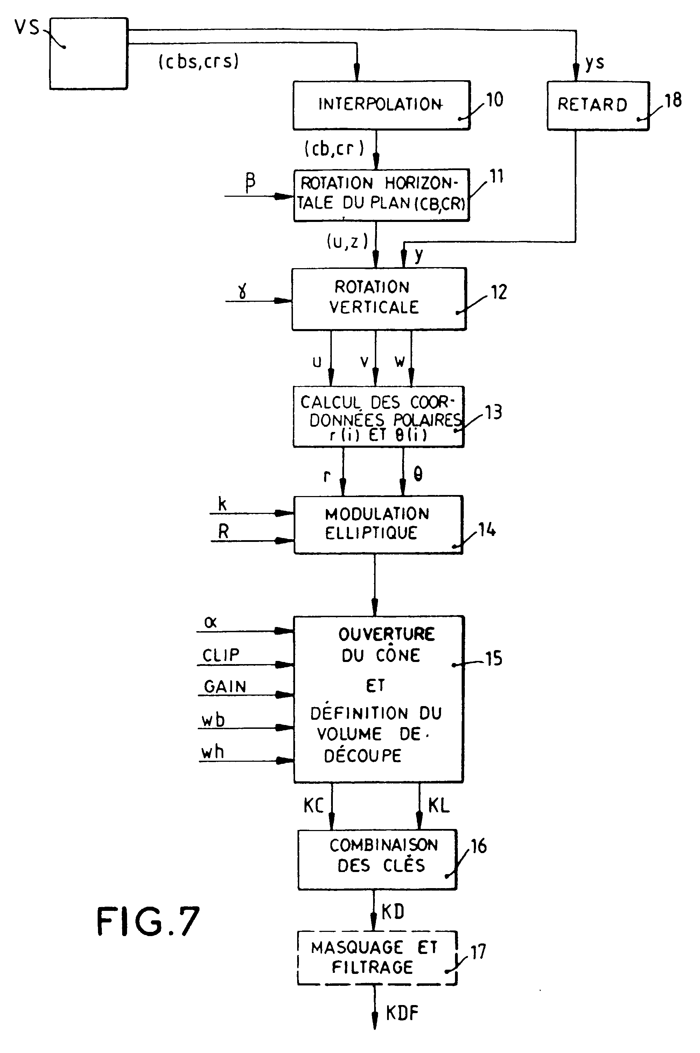

La figure 7 représente l'algorithme de calcul de la clé de découpe selon l'invention. Cet algorithme synthétise les différentes étapes réalisées préférentiellement par microprocesseur et décrites des figures 2a et 2b à la figure 6.

Chaque pixel de la vidéo source VS comprend trois composantes cbs, crs, ys dans l'espace des couleurs référencé par le repère (CB, CR, Y).

Comme cela est connu de l'homme de l'art, les données de luminance et de chrominance sont généralement au format 4 : 2 : 2. La fréquence d'échantillonnage des composantes de luminance est de 13,5 MHz alors que celle des composantes de chrominance est de 6,75 MHz. Il est alors nécessaire d'interpoler le train de composantes chrominance cbs, crs qui est au format 2 : 2 en un train de composantes chrominance cb1, cr1 au format 4 : 4. L'opérateur 10 d'interpolation y pourvoit. De façon préférentielle, les composantes chrominance des pixels de la vidéo source VS sont interrompues pendant les suppressions de ligne afin que les composantes interpolées situées en début et en fin de ligne ne soient pas perturbées par le signal de suppression de ligne. L'interpolation s'effectue de façon connue en soi. Les informations relatives aux composantes chrominance cbs et crs sont de type entier. Afin de simplifier le calcul d'interpolation, le niveau achrome qui correspond, par exemple, au niveau 512 pour un signal vidéo codé sur 10 bits est converti en zéro arithmétique par inversion de la valeur du bit de poids fort. A titre d'exemple, l'interpolation peut être réalisée sur 55 points de différence de couleur de façon à obtenir une très grande précision de calculs. En sortie de l'interpolateur 10, les composantes cb et cr sont codées sur un nombre N de bits supérieur au nombre de bits de la vidéo. Ainsi, pour un signal vidéo codé sur 10 bits en entrée de l'interpolateur, la dynamique des échantillons cb, cr obtenus en sortie de l'interpolateur peut-elle, par exemple, être codée sur 16 bits parmi lesquels se trouvent les 10 bits de la vidéo, 4 bits de fractionnement destinés à définir la précision de la vidéo, 1 bit de signe et 1 bit de débordement.

Les composantes chrominance cb et cr issues du calcul d'interpolation sont transformées en composantes chrominance u et z par rotation horizontale 11 d'angle $\beta$ telle que celle décrite en figure 2a.

La rotation horizontale est réalisée en deux temps. Dans un premier temps, le microprocesseur charge les informations $\sin(\beta)$ et $\cos(\beta)$ pendant la suppression de trame et un multiplicateur effectue le calcul des produits cr x $\cos(\beta)$, cr x $\sin(\beta)$, cb x $\cos(\beta)$ et cb x $\sin(\beta)$, pour chaque point de l'image, pendant la trame active. Les informations u et z circulent à la fréquence de 13,5 MHz. Les informations $\cos(\beta)$, $\sin(\beta)$ circulent à la fréquence de 27 MHz. Il s'ensuit qu'en sortie du multiplicateur les informations sont multiplexées à la fréquence de 27 MHz.

Dans un deuxième temps, les informations multiplexées à la fréquence de 27 MHz sont démultiplexées et matricées pour obtenir les signaux u et z à la fréquence de 13,5 MHz.

La relation matricielle, déjà mentionnée lors de la description de la figure 2a, s'écrit :

$$\begin{pmatrix} u \\ z \end{pmatrix} = \begin{pmatrix} \cos(\beta) & \sin(\beta) \\ -\sin(\beta) & \cos(\beta) \end{pmatrix} \begin{pmatrix} cb \\ cr \end{pmatrix}$$

Les échantillons de luminance ys de la vidéo sujet Vs sont retardés par le retard 19 en échantillons de luminance y de façon à compenser le retard pris par les échantillons de chrominance cbs et crs au cours des opérations d'interpolation 10 et de rotation horizontale 11. Afin que l'information de luminance y ait un format identique à l'information de chrominance cb, cr, les échantillons de luminance sont translatés d'échelles de façon à faire correspondre le zéro de luminance avec le zéro arithmétique et sont codés sur un nombre N de bits identique à celui des échantillons de chrominance. Les composantes cb, cr, y de chaque pixel sont alors transformées en composantes (u, v, w) par rotation verticale d'angle $\gamma$ telle que celle décrite en figure 2b.

La rotation verticale s'effectue selon le même principe que celui décrit pour la rotation horizontale.

Dans un premier temps, le microprocesseur charge les informations sin($\gamma$) et cos($\gamma$) pendant la suppression de trame alors qu'un multiplicateur effectue le calcul des produits z x cos($\gamma$), z x sin($\gamma$), y x cos($\gamma$) et y x sin($\gamma$) pendant la trame active. Les informations z, y circulent à la fréquence de 13,5 MHz. Les informations cos($\gamma$), sin($\gamma$) circulent à la fréquence de 27 MHz. Il s'ensuit qu'en sortie du multiplicateur, les informations sont multiplexées à la fréquence de 27 MHz.

Dans un deuxième temps, les informations multiplexées à la fréquence de 27 MHz sont démultiplexées et matricées pour obtenir les signaux w et v à la fréquence de 13,5 MHz. La relation matricielle, déjà mentionnée lors de la description de la figure 2b, s'écrit :

$$\begin{pmatrix} w \\ v \end{pmatrix} = \begin{pmatrix} \cos(\gamma) & \sin(\gamma) \\ \sin(\gamma) & -\cos(\gamma) \end{pmatrix} \begin{pmatrix} z \\ y \end{pmatrix}$$

Durant l'opération de rotation verticale 12, le signal w est retardé de façon à compenser le temps de traitement nécessaire à l'opération 13 de calcul des coordonnées r, $\theta$ qui suit l'opération 12 de rotation verticale.

Les coordonnées r et $\theta$ associées à chaque pixel sont données par les formules :

$$r = \sqrt{u^2 + v^2}$$

$$\theta = \overrightarrow{U}, \overrightarrow{O}P_{(M)}),$$

comme cela a été mentionné précédemment.

Les coordonnées r et $\theta$ sont récupérées en sortie de l'opérateur 13 afin de réaliser la modulation elliptique 14.

La modulation elliptique 14 est préférentiellement réalisée par le calcul d'un facteur modulant A. Le facteur A est calculé pour chaque pixel, pendant la durée de suppression de trame, à l'aide de deux paramètres de réglage k et R tels que ceux mentionnés lors de la description de la figure 5 ; il vient :

$$A = \sqrt{k^2 \cos^2(\theta + R) + \sin^2(\theta + R)}.$$

Le facteur k permet la déformation elliptique de la distance de chrominance r et l'angle R permet la rotation de la section elliptique du cône de 0 à $\pi$.

La distance de chrominance modulée elliptiquement s'écrit alors

$$r_e = r(A)^{1/2}.$$

Le calcul de A s'effectue, par exemple, à l'aide de mémoires EPROMs câblées à cette fin. La dynamique de la multiplication de r par $(A)^{1/2}$ s'effectue sur N bits, par exemple 16 bits, à la fréquence d'échantillonnage des composantes de luminance, soit 13,5 MHz.

La modulation elliptique 14 est suivie d'une opération 15 permettant l'ouverture du cône et la définition du volume de découpe à l'aide des paramètres $\alpha$, CLIP, GAIN, wb et wh.

L'angle d'ouverture conique $\alpha$ ainsi que la valeur CLIP de seuil de distance chrominance sont appliqués aux valeurs $r_e$ et w de chaque pixel selon la loi énoncée précédemment en figure 6, soit :

$$r_e - \alpha\, w = CLIP.$$

Le paramètre GAIN permet de définir la taille de la zone de transition entre le fond coloré et le sujet comme cela a été mentionné auparavant.

De même, les paramètres wb et wh, respectivement seuil de luminance bas et seuil de luminance haut, permettent une délimitation du volume du fond coloré selon l'axe W.

Ainsi, un avantage de l'invention est-il le caractère facilement adaptatif du volume définissant le fond coloré.

La définition du volume de découpe permet la génération de la clé de chrominance KC et de la clé de luminance KL telles que mentionnées ci-dessus.

Les clés KC et KL issues de l'opération 15 de définition du volume de découpe sont alors combinées par une opération 16 de combinaison de façon à obtenir la clé KD permettant la découpe du volume définissant le fond coloré. Comme cela a été mentionné précédemment, il vient :

$$KD = MAX\,[KC, KL].$$

Les pixels pour lesquels KD = 1 appartiennent au sujet et ceux pour lesquels KD = 0 appartiennent au fond coloré. Pour les pixels de la zone de transition, KD est compris entre 0 et 1.

Selon le mode de réalisation préférentiel de l'invention, l'opération 16 de combinaison des clés KC et KL est suivi d'une opération 17, connue en soi, de masquage et de filtrage de la clé KD. En effet, lors de l'extraction du sujet, il arrive qu'une partie des détails qui appartiennent au sujet soit assimilée au fond coloré. L'exemple le plus souvent rencontré est la perte de colorimétrie des yeux d'un personnage. L'introduction de l'opération de masquage et de filtrage permet alors d'invalider localement le niveau de la découpe. A titre d'exemple, le masque peut être de forme rectangulaire et de taille réglable. Il est cependant possible d'utiliser des formes de masque différentes issues de générateurs de formes.

Comme cela est connu de l'homme de l'art, le filtrage de la clé de découpe permet d'éliminer les résidus de couleur du fond de la vidéo sujet.

La clé de découpe finale KDF du sujet est issue de l'opération de masquage et de filtrage 17. La clé KDF est alors appliquée de façon connue à l'opération de mélange final pour générer l'image du sujet évoluant devant le nouveau fond.

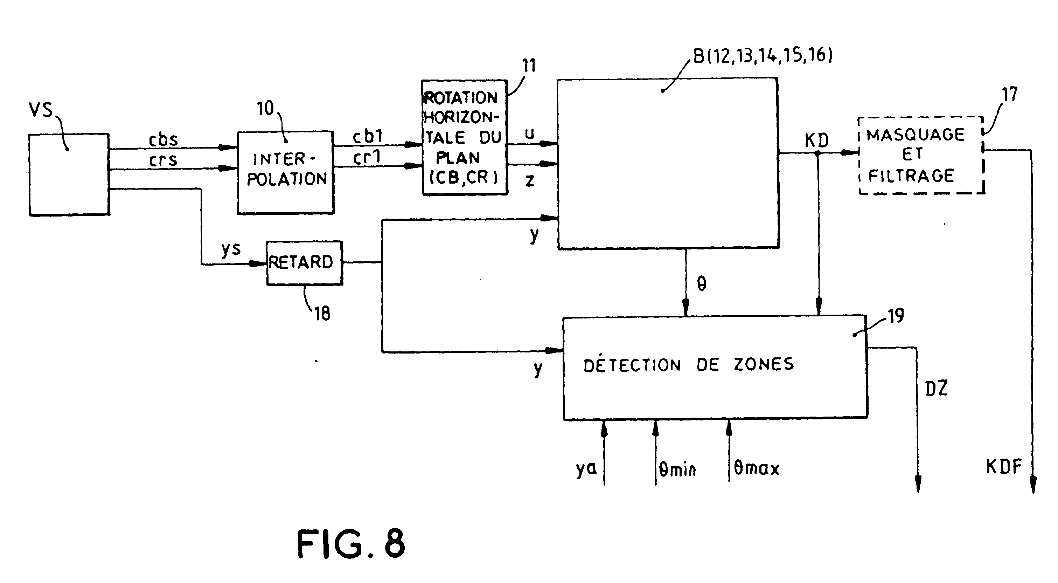

La figure 8 représente un perfectionnement de l'algorithme décrit en figure 7.

Ce perfectionnement concerne la génération d'une information de détection de zones DZ issu d'un opérateur 19.

Avantageusement, ce perfectionnement permet la détection de l'ombre portée par le sujet sur le fond coloré. L'ombre portée se caractérise par une information de luminance inférieure au niveau moyen de luminance du fond coloré et de même teinte que celle du fond coloré.

Selon l'invention, l'ombre portée peut être supprimée ou restituée par atténuation de luminance du nouveau fond d'accueil. Pour l'information qui permet la découpe, l'ombre ne fait pas partie du fond coloré. Il faut cependant la distinguer du sujet. A cette fin, tout pixel situé autour de la teinte du fond- coloré, dont la valeur de luminance est inférieure à un certain seuil et qui appartient à la zone de transition 2 située entre le fond coloré 1 et le sujet 3 est considéré comme un pixel d'ombre.

Avantageusement, l'orientation et la forme conique du volume définissant le fond coloré permettent de faire entrer les pixels d'ombre dans la zone de transition 2 séparant le sujet du fond coloré.

Sur la figure 8 sont représentés l'opérateur d'interpolation 10, l'opérateur de rotation horizontale 11, l'opérateur de retard 18 et l'opérateur de masquage et de filtrage 17, tels que décrits en figure 7. Pour des raisons de simplification, les opérateurs 12, 13, 14, 15 et 16 sont regroupés dans le même bloc B.

Selon le perfectionnement de l'invention, l'opérateur 19 de détection de zones comprend des opérations permettant la détection de l'ombre portée par le sujet sur le fond coloré. La composante luminance y issue de l'opérateur de retard 18 est comparée à une valeur de seuil de luminance ya et la coordonnée angulaire $\theta$ issue de l'opérateur 13 décrit à la figure 7 est comparée à deux valeurs $\theta$min et $\theta$max dont la différence $\theta$max - $\theta$min définit l'ouverture angulaire dans laquelle doit se situer l'angle $\theta$ pour que la teinte du pixel associé à $\theta$ soit assimilée à la teinte du fond coloré. Tout pixel dont la valeur de $\theta$ est comprise entre $\theta$ min et $\theta$max et dont la valeur de luminance y est inférieure à ya est considéré comme un pixel d'ombre.

Comme cela a été mentionné précédemment, les pixels d'ombre sont situés dans la zone de transition 2 séparant le sujet du fond coloré. Ainsi, la clé KD est-elle appliquée à l'opérateur 19 de détection de zones de façon à apporter l'information permettant de localiser les pixels de la zone de transition 2. Le signal DZ issu de l'opérateur 19 de détection de zones permet alors de donner une information de détection des pixels d'ombre selon la méthode mentionnée ci-dessus.

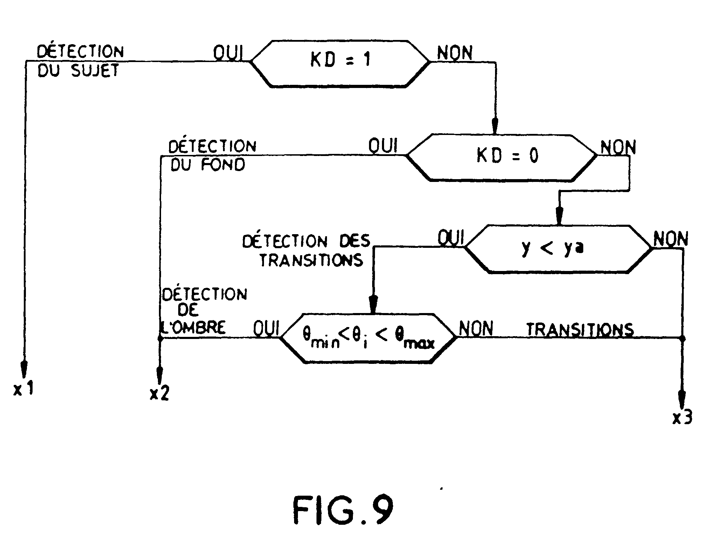

Avantageusement, comme cela apparaît en figure 9, le signal DZ peut fournir non seulement une information pour localiser les pixels d'ombre mais aussi différentes informations permettant de localiser les pixels de la vidéo sujet selon leur position dans l'espace des couleurs.

Sur la figure 9 sont représentées les différentes étapes de l'opération 19 de détection de zones sous forme d'organigramme dans le cas où le signal DZ fournit toutes les informations permettant de localiser les pixels de la vidéo sujet selon leur position dans l'espace des couleurs. L'invention concerne cependant aussi les cas où DZ donne tout ou partie de ces informations.

Si la clé KD a pour valeur 1, l'information DZ prend une valeur x1 traduisant la détection du sujet.

Si la clé KD a pour valeur 0, l'information DZ prend une valeur x2 traduisant la détection du fond.

Si la clé KD a une valeur comprise entre 0 et 1, la valeur de luminance y est comparée à la valeur de seuil ya et :

- Si y n'est pas inférieur à ya, l'information DZ prend une valeur x3 traduisant la détection de la zone de transition entre fond et sujet.
- Si y est inférieur à ya et si $\theta$ est compris entre $\theta$min et $\theta$max, l'information DZ prend une valeur traduisant la détection de l'ombre. Préférentiellement, cette valeur est égale à x2 de façon que les pixels d'ombre soient traités comme les pixels du fond.
- Si y est inférieur à ya et si $\theta$ n'est pas compris dans l'intervalle $\theta$min, $\theta$max, l'information DZ prend une valeur traduisant la détection de la zone de transition entre fond et sujet.

## Revendications

1. Procédé de calcul d'une clé KD de découpe d'un sujet évoluant devant un fond coloré, ladite clé permettant de séparer l'espace des couleurs en trois zones, une première zone (1) définissant un volume représentant le fond coloré, une deuxième zone (3) définissant un volume représentant le sujet et une troisième zone (2) définissant une zone de transition entre le fond coloré et le sujet, caractérisé en ce qu'il comprend différentes étapes de calcul (10, 11, 12, 13, 14, 15) permettant de définir le volume représentant le fond coloré sous forme de cône d'angle d'ouverture $\alpha$ dont l'axe de symétrie (W) passe par le point achrome et de luminance nulle de l'espace des couleurs et un point représentant la couleur du fond coloré.

2. Procédé selon la revendication 1, caractérisé en ce que les coordonnées polaires $r_{(i)}$ et $\theta_{(i)}$ des différents pixels $(M_{(i)})$ qui définissent une section droite du cône dans un plan (Uo, Vo) tel que le trièdre (Uo, Vo, W) soit un trièdre direct, suivent l'équation :

$$k^2 \, r_{(i)}^2 \, \cos^2 (\theta_{(i)} + R) + r_{(i)}^2 \, \sin^2 (\theta_{(i)} + R) = \text{constante},$$

où $\theta_{(i)}$ est l'angle polaire définissant le point $M_{(i)}$ dans le plan (Uo, Vo), k et R étant respectivement un facteur de modulation elliptique de la coordonnée $r_{(i)}$ et un angle de rotation de la section droite du cône.

3. Procédé selon la revendication 2, caractérisé en ce que l'ouverture $\alpha$ du cône est reliée à un paramètre de réglage CLIP de façon que :

$$r_{e(i)} - \alpha \, w_{(i)} = \text{CLIP}$$

où

$$r_{e(i)} = r_{(i)} \, (A)^{1/2}$$

avec

$$A = \sqrt{k^2 \cos^2 (\theta_{(i)} + R) + \sin^2 (\theta_{(i)} + R)}$$

et où $w_{(i)}$ est la coordonnée sur l'axe de symétrie (W) dudit cône du plan (Uo, Vo), la face opposée au sommet du cône étant définie par une coordonnée wh sur l'axe de symétrie (W) du cône.

**4.** Procédé selon la revendication 2 ou 3, caractérisé en ce que le facteur de modulation elliptique k est tel que $1 \leq k \leq 2$, et en ce que l'angle R peut varier de 0 à $\pi$.

**5.** Procédé selon l'une quelconque des revendications 1 à 4, caractérisé en ce que la zone de transition entre le fond coloré et le sujet est définie par une zone d'espace comprise entre la surface du cône d'ouverture $\alpha$ définissant le fond coloré et un cône d'ouverture $\alpha 1$ supérieure à $\alpha$, de même axe de symétrie et de même sommet que le cône définissant le fond coloré, et dont la face opposée au sommet est dans le même plan que la face opposée au sommet du cône définissant le fond coloré.

**6.** Procédé selon la revendication 5, caractérisé en ce que la taille de la zone de transition est ajustable par un paramètre de réglage (GAIN).

**7.** Procédé selon l'une quelconque des revendications 1 à 6, caractérisé en ce que le cône définissant le fond coloré peut être tronqué d'une distance d séparant la coordonnée ws donnant la position du sommet du cône sur l'axe de symétrie (W) d'une coordonnée wb définissant, sur ledit axe de symétrie, un seuil de luminance bas wb ayant une valeur comprise entre ws et wh, wh étant l'abscisse du plan définissant la face opposée au sommet du cône.

**8.** Procédé selon la revendication 7 lorsqu'elle dépend de la revendication 5 ou 6 caractérisé en ce que la clé de découpe KD est issue d'une opération de combinaison d'une clé de chrominance KC et d'une clé de luminance KL de façon que :

$$KD = MAX [KC, KL]$$

la clé de luminance KL ayant pour valeur 1 pour tout pixel dont la coordonnée $w_{(i)}$ sur l'axe de symétrie du cône d'ouverture $\alpha$ est inférieure à wb et pour valeur 0 pour tout pixel dont la coordonnée $w_{(i)}$ sur l'axe de symétrie du cône d'ouverture $\alpha$ est supérieure à wh, et la clé de chrominance KC ayant pour valeur 0 pour tout pixel appartenant au cône d'ouverture $\alpha$ et pour valeur 1 pour tout pixel situé au-delà du cône d'ouverture $\alpha 1$.

**9.** Procédé selon l'une quelconque des revendications précédentes, caractérisé en ce que le niveau achrome des différentes composantes de chrominance et le niveau zéro de la composante de luminance qui constituent l'origine du repère de l'espace des couleurs sont convertis en zéros arithmétiques.

**10.** Procédé selon l'une quelconque des revendications précédentes, caractérisé en ce qu'il comprend une étape d'interpolation (10) de façon que les composantes chrominance de différence de couleur rouge (crs) et de différence de couleur bleue (cbs) des pixels de l'image (VS) constituée par le sujet évoluant devant le fond coloré soient transposées au même format vidéo que les composantes luminance desdits pixels.

**11.** Procédé selon la revendication 10, caractérisé en ce qu'il comprend une étape permettant de coder la composante chrominance de différence de couleur rouge (crs), la composante chrominance de différence de couleur bleue (cbs), et la composante luminance (ys) de chaque pixel sur un nombre de bits N supérieur au nombre de bits vidéo desdites composantes.

**12.** Procédé selon la revendication 11, caractérisé en ce que le nombre de bits vidéo des composantes chrominance de différence de couleur rouge et bleu et des composantes de luminance est égal à 10 et en ce que le nombre N de bits sur lequel sont codées lesdites composantes chrominance et luminance est égal à 16, parmi lesquels se trouvent les 10 bits de la vidéo, 4 bits de fractionnement destinés à définir la précision de la vidéo, 1 bit de signe et 1 bit de débordement.

**13.** Procédé selon l'une quelconque des revendications précédentes, caractérisé en ce qu'il comprend une étape de détection de zones permettant de délivrer une information DZ donnant la localisation des différents pixels de l'image constituée par le sujet évoluant devant le fond coloré.

**14.** Procédé selon la revendication 13, caractérisé en ce que l'étape de détection de zones comprend une étape permettant de délivrer une information DZ donnant la localisation des pixels représentant l'ombre du sujet portée sur le fond coloré.

**15.** Procédé selon la revendication 14, caractérisé en ce que l'étape permettant de délivrer l'information DZ donnant la localisation des pixels représentant l'ombre du sujet portée sur le fond coloré comprend la séquence suivante :

- Si la clé de découpe KD est comprise entre 0 et 1, la valeur de luminance y de chaque pixel $M_{(i)}$ est comparée à une valeur de seuil ya et :
- Si y est supérieur à ya, l'information DZ prend une valeur traduisant la détection de la zone de transition entre fond et sujet.
- Si y est inférieur à ya et si l'angle $\theta_{(i)}$ est compris entre deux valeurs θmin et θmax dont la différence θmin - θmax définit l'ouverture angulaire dans laquelle doit se situer l'angle $\theta_{(i)}$ pour que la teinte du pixel associé à $\theta_{(i)}$ soit assimilée à la teinte du fond coloré, l'information DZ prend une valeur traduisant la détection de l'ombre.
- si y est inférieur à ya et si l'angle $\theta_{(i)}$ n'est pas compris entre lesdites valeurs θmin et θmax, l'information DZ prend une valeur traduisant la détection de la zone de transition entre fond et sujet où $\theta_{(i)}$ est l'angle polaire définissant le point $M_{(i)}$ dans le plan (Uo, Vo) tel que le trièdre (Uo, Vo, W) soit un trièdre direct.

**16.** Procédé selon l'une quelconque des revendications précédentes, caractérisé en ce qu'il comprend une opération (17) de masquage et de filtrage permettant de calculer une clé de découpe finale (KDF) à partir de la clé de découpe KD.

**17.** Appareil électronique comprenant des moyens pour calculer une clé (KD) de découpe d'un sujet évoluant devant un fond coloré, ladite clé (KD) permettant de séparer l'espace des couleurs en trois zones, une première zone (1) définissant un volume représentant le fond coloré, une deuxième zone (3) définissant un volume représentant le sujet et une troisième zone (2) définissant une zone de transition entre le fond coloré et le sujet, caractérisé en ce que les moyens pour calculer la clé (KD) de découpe comprennent des moyens (10, 11, 12) pour calculer les coordonnées de chaque pixel de l'espace des couleurs dans un repère (U, V, W), le repère (U, V, W) étant un trièdre direct dont le centre est le point achrome de luminance nulle et dont l'axe W pointe vers un point de couleur du fond coloré, et des moyens (13, 14, 15) pour définir le volume représentant le fond coloré sous forme de cône d'angle d'ouverture α ayant pour axe de symétrie l'axe W.

**18.** Appareil selon la revendication 17, caractérisé en ce qu'il comprend des moyens (14) pour moduler elliptiquement la section droite du cône d'angle d'ouverture α.

**19.** Appareil selon l'une quelconque des revendications 17 et 18, caractérisé en ce qu'il comprend des moyens (GAIN) pour que la zone de transition entre le fond coloré et le sujet soit définie par une zone d'espace comprise entre la surface du cône d'ouverture α définissant le fond coloré et un cône d'ouverture α1 supérieure à α, de même axe de symétrie et de même sommet que le cône définissant le fond coloré, et dont la face opposée au sommet est dans le même plan que la face opposée au sommet du cône définissant le fond coloré.

**20.** Appareil selon l'une quelconque des revendications 17 à 19, caractérisé en ce qu'il comprend des moyens pour tronquer d'une distance d le cône définissant le fond coloré, ladite distance d séparant la coordonnée ws donnant la position du sommet du cône sur l'axe de symétrie W d'une coordonnée wb définissant, sur ledit axe de symétrie, un seuil de luminance bas wb ayant une valeur comprise entre ws et wh, wh étant l'abscisse du plan définissant la face opposée au sommet du cône.

**21.** Appareil selon l'une quelconque des revendications 17 à 20, caractérisé en ce qu'il comprend des moyens permettant de détecter lesdites zones (1, 2, 3) afin de délivrer une information (DZ) donnant la localisation des différents pixels de l'image constituée par le sujet évoluant devant le fond coloré.

**22.** Appareil selon la revendication 21, caractérisé en ce que les moyens permettant de détecter lesdites zones (1, 2, 3) comprennent des moyens pour délivrer une information (DZ) donnant la localisation des pixels représentant l'ombre du sujet portée sur le fond coloré.

**23.** Appareil selon l'une quelconque des revendications 17 à 22, caractérisé en ce qu'il comprend des moyens pour incruster le sujet découpé sur un nouveau fond d'accueil.

**24.** Mélangeur vidéo, caractérisé en ce qu'il comprend un appareil selon l'une quelconque des revendications 17 à 23.

**25.** Dispositif autonome de découpe et d'incrustation d'image vidéo, caractérisé en ce qu'il comprend un appareil selon l'une quelconque des revendications 17 à 23.

**Patentansprüche**

**1.** Verfahren zur Berechnung eines Stanzsignals KD für ein sich vor einem farbigen Hintergrund bewegendes Objekt, wobei dieses Signal die Auftrennung des Farbvektorraums in drei Bereiche ermöglicht, einen ersten Bereich (1), der ein den farbigen Hintergrund darstellendes Volumen definiert, einen zweiten Bereich (3), der ein das Objekt darstellendes Volumen definiert, und einen dritten Bereich (2), der einen Übergangsbereich zwischen dem farbigen Hintergrund und dem Objekt definiert, gekennzeichnet durch verschiedene Berechnungsschritte (10, 11, 12, 13, 14, 15), die die Bestimmung des Volumens ermöglichen, das den farbigen Hintergrund in der Form eines Kegels mit einem Öffnungswinkel $\alpha$ darstellt, dessen Symmetrieachse (W) durch den achromatischen Punkt mit der Helligkeit null des Farbvektorraums und einen Punkt verläuft, der die Farbe des farbigen Hintergrunds darstellt.

**2.** Verfahren nach Anspruch 1, dadurch gekennzeichnet, daß die Polarkoordinaten r(i) und 6(i) der verschiedenen Pixel (M(i)), die einen Kegelquerschnitt in einer Ebene (Uo, Vo) wie der Dreieckfläche (Uo,Vo,W), zum Beispiel einer rechtsgängigen Dreieckfläche definieren, nach der Gleichung:

$$k^2 r(i)^2 \cos^2(\theta(i) + R) + r(i)^2 \sin^2(\theta(i) + R) = \text{konstant},$$

wobei $\theta(i)$ der Polarwinkel ist, der den Punkt M(i) in der Ebene (Uo,Vo) bestimmt, k und R jeweils einen elliptischen Modulationsfaktor der Koordinaten r(i) und einen Drehwinkel des Kegelquerschnitts darstellen.

**3.** Verfahren nach Anspruch 2, dadurch gekennzeichnet, daß der Öffnungswinkel $\alpha$ des Kegels mit einem Einstellparameter CLIP derart verbunden ist, daß:

$$r_e(i) - \alpha w(i) = \text{CLIP}$$

wobei

$$r_e(i) = r(i)A^{\frac{1}{2}}$$

mit

$$A = \sqrt{k^2 \cos^2(\theta(i) + R) + \sin^2(\theta(i) + R)}$$

und wobei w(i) die Koordinate auf der Symmetrieachse (W) des Kegels der Ebene (Uo, Vo) und die der Kegelspitze gegenüberliegende Fläche durch eine Koordinate wh auf der Symmetrieachse (W) des Kegels gebildet ist.

**4.** Verfahren nach Anspruch 2 oder 3, dadurch gekennzeichnet, daß der elliptische Modulationsfaktor k so gewählt ist, daß $1 \le k \le 2$ ist, und daß sich der Winkel R von 0 bis $\pi$ ändern kann.

**5.** Verfahren nach einem der Ansprüche 1 bis 4, dadurch gekennzeichnet, daß der Übergangsbereich zwischen dem farbigen Hintergrund und dem Objekt durch einen Zwischenbereich zwischen der Fläche der Kegelöffnung $\alpha$, die den farbigen Hintergrund bildet, und einer Kegelöffnung $\alpha$1 größer als $\alpha$ ist, mit derselben Symmetrieachse und derselben Spitze wie der den farbigen Hintergrund bildende Kegel, und deren der Spitze gegenüberliegende Fläche in derselben Ebene liegt wie die der Kegelspitze gegenüberliegende Fläche, die den farbigen Hintergrund bildet.

6. Verfahren nach Anspruch 5, dadurch gekennzeichnet, daß die Größe des Übergangsbereichs durch einen Einstellparameter (GAIN) einstellbar ist.

7. Verfahren nach einem der Ansprüche 1 bis 6, dadurch gekennzeichnet, daß der den farbigen Hintergrund bildende Kegel um einen Abstand d abgestumpft sein kann, der die Koordinate ws, die die Lage der Kegelspitze auf der Symmetrieachse (W) von einer Koordinate wb trennt, die auf der Symmetrieachse eine untere Helligkeitsschwelle wb bildet, die einen Wert zwischen ws und wh aufweist, wobei wh die Abszisse der Ebene ist, die die der Kegelspitze gegenüberliegende Fläche bildet.

8. Verfahren nach Anspruch 7, wenn dieser von dem Anspruch 5 oder 6 abhängig ist, dadurch gekennzeichnet, daß das Stanzsignal KD aus einem Betrieb mit der Kombination eines Chromimamz-Stanzsignals KC und eines Luminanz-Stanzsignals KL derart ausgegeben wird, daß:

$$KD = MAX[KC, KL],$$

wobei das Luminanz-Stanzsignal KL einen Wert 1 für jedes Pixel hat, dessen Koordinate w(i) auf der Symmetrieachse des Kegelöffnungswinkels $\alpha$ kleiner als wb ist, und den Wert 0 für jedes Pixel hat, dessen Koordinate w(i) auf der Symmetrieachse des Kegelöffnungswinkels $\alpha$ größer als wh ist, und das Chrominanz-Stanzsignal KC einen Wert 0 für jedes Pixel hat, das zu dem Kegelöffnungswinkel $\alpha$ gehört, und den Wert 1 für jedes Pixel hat, das außerhalb des Kegelöffnungswinkels $\alpha$1 liegt.

9. Verfahren nach einem der vorangehenden Ansprüche, dadurch gekennzeichnet, daß der achromatische Wert der verschiedenen Chrominanzkomponenten und der Nullwert der Luminanzkomponente, die den Nullpunkt der Markierung des Farbvektorraums darstellt, in arithmetische Nullwerte umgesetzt werden.

10. Verfahren nach einem der vorangehenden Ansprüche, dadurch gekennzeichnet, daß es einen Schritt für eine derartige Interpolation (10) enthält, daß die Chrominanzdifferenz-Komponenten der Farbe rot (crs) und für die Differenz der Farbe blau (cbs) der Pixel des Bildes (VS) durch das Objekt gebildet werden, das sich vor dem farbigen Hintergrund bewegt, die in dasselbe Videoformat wie die Luminanzkomponenten dieser Pixel umgesetzt sein können.

11. Verfahren nach Anspruch 10, dadurch gekennzeichnet, daß es einen Schritt enthält, der die Kodierung der Chrominanzkomponente für die Differenz der Farbe rot (crs) , der Chrominanzkomponente für die Differenz der Farbe blau (cbs) und die Luminanzkomponente (ys) jedes Pixels auf eine Bitzahl N ermöglicht, die größer ist als die Anzahl der Videobit der genannten Komponenten.

12. Verfahren nach Anspruch 11, dadurch gekennzeichnet, daß die Anzahl der Videobit der Chrominanzkomponenten für die Differenz der Farben rot und blau und der Luminanzkomponenten gleich 10 ist und daß die Anzahl N der Bit, auf die die Chrominanz- und Luminanzkomponenten kodiert sind, gleich 16 ist, unter denen sich die 10 Bit des Video, 4 Fraktionierungsbit zur Bestimmung der Genauigkeit des Video, ein Vorzeichenbit und ein Überlaufbit befinden.

13. Verfahren nach einem der vorangehenden Ansprüche, gekennzeichnet durch einen Schritt zur Ermittlung der Bereiche, die es ermöglichen, eine Information DZ abzuleiten, die die Lage der verschiedenen Bildpixel angibt, die durch das sich vor dem farbigen Hintergrund bewegende Objekt gebildet werden.

14. Verfahren nach Anspruch 13, dadurch gekennzeichnet, daß der Schritt zur Ermittlung der Bereiche einen Schritt enthält, der es ermöglicht, eine Information DZ abzuleiten, die die Lage der Pixel angibt, die den Schatten des auf dem farbigen Hintergrund vorhandenen Objektes darstellen.

15. Verfahren nach Anspruch 14, dadurch gekennzeichnet, daß der Schritt, der es ermöglicht, die Information DZ abzuleiten, die die Lage der Pixel angibt, die den Schatten des auf dem farbigen Hintergrund angeordneten Objektes darstellen, die folgende Sequenz enthält:

- wenn das Farbstanzsignal KD zwischen 0 und 1 liegt, wird jeder Luminanzwert y jedes Pixels M(i) mit einem Schwellwert ya verglichen und:
- wenn y größer ist als ya, nimmt die Information DZ einen Wert an, der die Ermittlung des Übergangsbereichs zwischen dem Hintergrund und dem Objekt umsetzt,

- wenn y kleiner ist als ya und wenn der Winkel $\theta(i)$ zwischen zwei Werten $\theta$min und $\theta$max liegt, deren Differenz $\theta$min - $\theta$max den Öffnungswinkel bestimmt, in dem der Winkel $\theta(i)$ liegen muß, damit der Farbton des zu $\theta(i)$ gehörenden Pixels an den Farbton des farbigen Hintergrund angenähert ist, nimmt die Information DZ einen Wert an, der die Ermittlung des Schattens übernimmt,
- wenn y kleiner ist als ya und wenn der Winkel $\theta(i)$ nicht zwischen den genannten Werten $\theta$min und $\theta$max liegt, nimmt die Information DZ einen Wert an, der die Ermittlung des Übergangsbereichs zwischen dem Hintergrund und dem Objekt durchführt,

wobei $\theta(i)$ der Polarwinkel ist, der den Punkt M(i) in der Ebene (Uo, Vo) bestimmt, wenn die Dreieckfläche (Uo, Vo, W) eine rechtsgängige Dreieckfläche ist.

16. Verfahren nach einem der vorangehenden Ansprüche, gekennzeichnet durch einen Betrieb (17) mit einer Verdekkung und Filterung, der die Berechnung eines endgültigen Farbstanzsignals (KDF) aus dem Farbstanzsignal KD ermöglicht.

17. Elektronische Vorrichtung mit Mitteln zum Berechnen eines Stanzsignals (KD) eines sich vor einem farbigen Hintergrund bewegenden Objekts, wobei das Stanzsignal (KD) eine Auftrennung des Farbvektorraums in drei Bereiche ermöglicht, einen ersten Bereich (1), der ein den farbigen Hintergrund darstellendes Volumen bestimmt, einen zweiten Bereich (3), der ein das Objekt darstellendes Volumen bestimmt, und einen dritten Bereich (2), der einen Übergangsbereich zwischen dem farbigen Hintergrund und dem Objekt bestimmt, dadurch gekennzeichnet, daß die Mittel zum Berechnen des Stanzsignals Mittel (10, 11, 12) zum Berechnen der Koordinaten jedes Pixels des Farbvektorraums in einer Markierung (U, V, W) enthalten, daß die Markierung (U, V, W) eine rechtsgängige Dreieckfläche ist, deren Mittelpunkt der achromatische Punkt mit der Helligkeit 0 ist und deren Achse W zu einem Punkt der Farbe des farbigen Hintergrunds zeigt, und Mittel (13, 14, 15) vorgesehen sind, um das den farbigen Hintergrund darstellende Volumen in der Form des Kegelöffnungswinkels $\alpha$ zu bestimmen, der als die Symmetrieachse die Achse W enthält.

18. Vorrichtung nach Anspruch 17, dadurch gekennzeichnet, daß sie Mittel (14) zur elliptischen Modulation des Querschnitts des Kegels mit dem Öffnungwinkel $\alpha$ aufweist.

19. Vorrichtung nach einem der Ansprüche 17 und 18, gekennzeichnet durch Mittel (GAIN), die bewirken, daß der Übergangsbereich zwischen dem farbigen Hintergrund und dem Objekt durch einen Zwischenbereich gebildet ist, der zwischen der Fläche der Kegelöffnung $\alpha$, die den farbigen Hintergrund bildet, und einer Kegelöffnung $\alpha$1, größer als $\alpha$, mit derselben Symmetrieachse und derselben Spitze wie der den farbigen Hintergrund bestimmende Kegel, und deren der Spitze gegenüberliegende Fläche in derselben Ebene liegt wie die den farbigen Hintergrund bestimmende, der Kegelspitze gegenüberliegende Fläche.

20. Vorrichtung nach einem der Ansprüche 17 bis 19, gekennzeichnet durch Mittel zum Abstumpfen eines Kegelabschnitts d, der den farbigen Hintergrund darstellt, wobei der Abschnitt die Koordinate ws, die die Lage der Kegelspitze auf der Symmetrieachse W angibt, von einer Koordinaten wb trennt, die auf der Symmetrieachse eine untere Helligkeitsschwelle wb mit einem Wert zwischen ws und wh darstellt, wobei wh der Abszissenwert der Ebene ist, die die der Kegelspitze gegenüberliegende Fläche bildet.

21. Vorrichtung nach einem der Ansprüche 17 bis 20, gekennzeichnet durch Mittel, die eine Ermittlung der genannten Bereiche (1, 2, 3) ermöglichen, um eine Information (DZ) zu liefern, die die Lage der verschiedenen Pixel des Bildes angibt, die durch das sich vor dem farbigen Hintergrund bewegende Objekt gebildet wird.

22. Vorrichtung nach Anspruch 21, dadurch gekennzeichnet, daß die die Ermittlung der Bereiche (1, 2, 3) ermöglichenden Mittel Mittel zum Ableiten einer Information (DZ) enthalten, die die Lage der Pixel angibt, die den Schatten des Objekts auf dem farbigen Hintergrund darstellen.

23. Vorrichtung nach einem der Ansprüche 17 bis 22, gekennzeichnet durch Mittel zum Einfügen des ausgestanzten Objekts auf einem neuen Aufnahmehintergrund.

24. Videomischer, dadurch gekennzeichnet, daß er eine Vorrichtung nach einem der Ansprüche 17 bis 23 enthält.

25. Selbständige Einrichtung zum Ausstanzen und Einfügen eines Videobildes, dadurch gekennzeichnet, daß sie eine Vorrichtung nach einem der Ansprüche 17 bis 23 enthält.

**Claims**

1. Method of calculating a key KD for clipping a subject moving against a coloured background, the said key making it possible to separate the colour space into three regions, a first region (1) defining a volume representing the coloured background, a second region (3) defining a volume representing the subject and a third region (2) defining a transition region between the coloured background and the subject, characterized in that it comprises various calculation steps (10, 11, 12, 13, 14, 15) making it possible to define the volume representing the coloured background in the form of a cone of aperture angle $\alpha$ whose axis of symmetry (W) passes through the achromic and zero-luminance point of the colour space and a point representing the colour of the coloured background.

2. Method according to Claim 1, characterized in that the polar coordinates r(i) and θ(i) of the various pixels (Mi) which define a cross section of the cone in a plane (Uo, Vo) such that the trihedral (Uo, Vo, W) is a right-handed trihedral, obey the equation:

$$k^2 \, r(i)^2 \, \cos^2 \, (\theta(i) + R) + r(i)^2 \, \sin^2(\theta(i) + R) = \text{constant},$$

where θ(i) is the polar angle defining the point M(i) in the plane (Uo, Vo), k and R being respectively an elliptical modulation factor for the coordinate r(i) and an angle of rotation of the cross section of the cone.

3. Method according to Claim 2, characterized in that the aperture $\alpha$ of the cone is linked with an adjustment parameter CLIP in such a way that:

$$r_e(i) - \alpha \, w(i) = \text{CLIP}$$

where

$$r_e(i) = r(i) \, (A)^{1/2}$$

with

$$A = \sqrt{k^2 \, \cos^2 \, (\theta(i) + R) + \sin^2 \, (\theta(i) + R)}$$

and where w(i) is the coordinate on the axis of symmetry (W) of the said cone of the plane (Uo, Vo), the face opposite the vertex of the cone being defined by a coordinate wh on the axis of symmetry (W) of the cone.

4. Method according to Claim 2 or 3, characterized in that the elliptical modulation factor k is such that $1 \leq k \leq 2$, and in that the angle R can vary from 0 to $\pi$.

5. Method according to any one of Claims 1 to 4, characterized in that the transition region between the coloured background and the subject is defined by a region of space included between the surface of the cone of aperture $\alpha$ defining the coloured background and a cone of aperture $\alpha 1$ greater than $\alpha$, with the same axis of symmetry and the same vertex as the cone defining the coloured background, and whose face opposite the vertex is in the same plane as the face opposite the vertex of the cone defining the coloured background.

6. Method according to Claim 5, characterized in that the size of the transition region can be altered through an adjustment parameter (GAIN).

7. Method according to any one of Claims 1 to 6, characterized in that the cone defining the coloured background can be truncated at a distance d separating the coordinate ws giving the position of the vertex of the cone on the axis of symmetry (W) from a coordinate wb defining, on the said axis of symmetry, a low luminance threshold wb having a value lying between ws and wh, wh being the abscissa of the plane defining the face opposite the vertex of the cone.

8. Method according to Claim 7 when it depends on Claim 5 or 6, characterized in that the clipping key KD arises from an operation of combining a chrominance key KC and a luminance key KL in such a way that:

$$KD = MAX [KC, KL]$$

the luminance key KL having the value 1 for any pixel whose coordinate w(i) on the axis of symmetry of the cone of aperture $\alpha$ is less than wb and the value 0 for any pixel whose coordinate w(i) on the axis of symmetry of the cone of aperture $\alpha$ is greater than wh, and the chrominance key KC having the value 0 for any pixel belonging to the cone of aperture $\alpha$ and the value 1 for any pixel situated beyond the cone of aperture $\alpha$1.

9. Method according to any one of the preceding claims, characterized in that the achromic level of the various chrominance components and the zero level of the luminance component which constitute the origin of the frame of reference of the colour space are converted into arithmetic zeros.

10. Method according to any one of the preceding claims, characterized in that it comprises a step of interpolation (10) such that the red colour difference chrominance component (crs) and blue colour difference chrominance component (cbs) of the pixels of the image (VS) consisting of the subject moving against the coloured background are transposed to the same video format as the luminance components of the said pixels.

11. Method according to Claim 10, characterized in that it comprises a step making it possible to code the red colour difference chrominance component (crs), the blue colour difference chrominance component (cbs), and the luminance component (ys) of each pixel on a number of bits N greater than the number of video bits of the said components.

12. Method according to Claim 11, characterized in that the number of video bits of the red and blue colour difference chrominance components and of the luminance components is equal to 10 and in that the number N of bits on which the said chrominance and luminance components are coded is equal to 16, among which are the 10 bits of the video, 4 splitting bits intended to define the accuracy of the video, 1 sign bit and 1 overflow bit.

13. Method according to any one of the preceding claims, characterized in that it comprises a region detection step making it possible to deliver a cue DZ giving the location of the various pixels of the image consisting of the subject moving against the coloured background.

14. Method according to Claim 13, characterized in that the region detection step comprises a step making it possible to deliver a cue DZ giving the location of the pixels representing the subject's shadow cast on the coloured background.

15. Method according to Claim 14, characterized in that the step making it possible to deliver the cue DZ giving the location of the pixels representing the subject's shadow cast on the coloured background comprises the following sequence:

- If the clipping key KD is between 0 and 1, the luminance value y of each pixel M(i) is compared with a threshold value ya and:
- If y is greater than ya, the cue DZ takes a value signifying the detection of the transition region between background and subject.
- If y is less than ya and if the angle $\theta(i)$ is between two values $\theta$min and $\theta$max whose difference $\theta$min - $\theta$max defines the angular aperture within which the angle $\theta(i)$ must lie in order for the hue of the pixel associated with $\theta(i)$ to be likened to the hue of the coloured background, the cue DZ takes a value signifying the detection of the shadow.
- If y is less than ya and if the angle $\theta(i)$ is not between the said values $\theta$min and $\theta$max, the cue DZ takes a value signifying the detection of the transition region between background and subject.

where $\theta(i)$ is the polar angle defining the point M(i) in the plane $(U_o, V_o)$ such that the trihedral $(U_o, V_o, W)$ is a right-handed trihedral.

**16.** Method according to any one of the preceding claims, characterized in that it comprises a masking and filtering operation (17) making it possible to calculate a final clipping key (KDF) from the clipping key KD.

**17.** Electronic apparatus comprising means for calculating a key (KD) for clipping a subject moving against a coloured background, the said key (KD) making it possible to separate the colour space into three regions, a first region (1) defining a volume representing the coloured background, a second region (3) defining a volume representing the subject and a third region (2) defining a transition region between the coloured background and the subject, characterized in that the means for calculating the clipping key (KD) comprise means (10, 11, 12) for calculating the coordinates of each pixel of the colour space in a frame of reference (U, V, W), the frame of reference (U, V, W) being a right-handed trihedral whose centre is the achromic point of zero luminance and whose axis W points towards a point of colour of the coloured background, and means (13, 14, 15) for defining the volume representing the coloured background in the form of a cone of aperture angle $\alpha$ having the axis W as axis of symmetry.

**18.** Apparatus according to Claim 17, characterized in that it comprises means (14) for elliptically modulating the cross section of the cone of aperture angle $\alpha$.

**19.** Apparatus according to either one of Claims 17 and 18, characterized in that it comprises means (GAIN) such that the transition region between the coloured background and the subject is defined by a region of space included between the surface of the cone of aperture $\alpha$ defining the coloured background and a cone of aperture $\alpha 1$ greater than $\alpha$, with the same axis of symmetry and the same vertex as the cone defining the coloured background, and whose face opposite the vertex is in the same plane as the face opposite the vertex of the cone defining the coloured background.

**20.** Apparatus according to any one of Claims 17 to 19, characterized in that it comprises means for truncating at a distance d the cone defining the coloured background, the said distance d separating the coordinate ws giving the position of the vertex of the cone on the axis of symmetry W from a coordinate wb defining, on the said axis of symmetry, a low luminance threshold wb having a value lying between ws and wh, wh being the abscissa of the plane defining the face opposite the vertex of the cone.

**21.** Apparatus according to any one of Claims 17 to 20, characterized in that it comprises means making it possible to detect the said regions (1, 2, 3) so as to deliver a cue (DZ) giving the location of the various pixels of the image consisting of the subject moving against the coloured background.

**22.** Apparatus according to Claim 21, characterized in that the means making it possible to detect the said regions (1, 2, 3) comprise means for delivering a cue (DZ) giving the location of the pixels representing the subject's shadow cast on the coloured background.

**23.** Apparatus according to any one of Claims 17 to 22, characterized in that it comprises means for overlaying the clipped subject onto a new receiving background.

**24.** Video mixer, characterized in that it comprises an apparatus according to any one of Claims 17 to 23.

**25.** Autonomous video image clipping and overlaying device, characterized in that it comprises an apparatus according to any one of Claims 17 to 23.

FIG.1

FIG.2a

FIG.2b

FIG.3

FIG.4

FIG.5

FIG.6

FIG.7

FIG. 8

FIG.9